# EUROPEAN PATENT APPLICATION

(11) **EP 3 858 804 A1**
(43) Date of publication of application: **04.08.2021**
(21) Application number: 21154915.9
(22) Date of filing: 03.02.2021
(51) Int. Cl.: C04B 35/634, C04B 35/645, C04B 35/83, F16D 69/02, C04B 35/52

(54) **BORON/BORON CARBIDE POWDER, CHOPPED CARBON FIBER AND CARBON BASED COMPOSITES FOR HEAT SINKS**

(30) Priority: 03.02.2020 US 202016779892
(71) Applicant: Goodrich Corporation, Charlotte, NC 28217 (US)
(72) Inventor: KAHN, Atta, Colorado Springs, CO Colorado 80906 (US)
(74) Representative: Dehns

(57) **Abstract**

A method of fabricating a brake component is disclosed. In various embodiments, the method includes preparing a mixture comprising a chopped fiber material, a boron-based powder and a binder; applying a pressure to the mixture while in a die to form a preform; and densifying the preform via a chemical vapor infiltration process to form a densified component.

## Description

### FIELD

The present disclosure relates generally to aircraft wheel and brake assemblies and, more particularly, to methods of fabricating brake components and heatsinks used in aircraft wheel and brake assemblies.

### BACKGROUND

Aircraft typically utilize brake systems on wheels to slow or stop the aircraft during landings, taxiing and rejected takeoffs. Aircraft brake systems generally employ a brake stack (also referred to as a heat sink) comprising a series of friction disks that may be forced into sliding contact with one another during brake actuation to slow or stop the aircraft. The heat sink typically comprises rotor disks and stator disks that, in response to axial compressive pressure, convert the kinetic energy of the aircraft into heat through frictional forces experienced between the friction disks. Heat sinks may exhibit static and dynamic frictional performance that vary greatly in response to environmental conditions (e.g., ambient temperature or humidity) and to the type of braking operation being performed (*e.g*., short runway take-off, landing or rejected take off). Heat sinks comprising combinations of carbon and ceramic matrix composite materials may prove advantageous in addressing frictional and wear performance.

Next generation heat sinks are expected to exhibit greater heat capacities in order to absorb and dissipate greater amounts of heat, particularly during rejected takeoffs. Boron or boron carbide materials possess relatively high heat capacities and good thermal stability. These materials, when incorporated into carbon fiber structures, provide components having relatively high heat capacity when compared to conventional carbon-carbon composite structures. Difficulties arise, however, when attempting to incorporate boron or boron carbide materials into three-dimensional carbon fiber structures, such as brake preforms, resulting in limitations on the size and amounts of the high heat capacity materials that may be incorporated into the three-dimensional carbon fiber structures.

### SUMMARY

A method of fabricating a brake component is disclosed. In various embodiments, the method includes the steps of preparing a mixture comprising chopped fibers, a boron-based powder and a binder; applying a pressure to the mixture while in a die to form a preform; and densifying the preform via a chemical vapor infiltration process to form a densified component.

In various embodiments, the boron-based powder includes at least one of boron and boron-carbide (*e.g*., the boron-based powder may include boron, boron-carbide or a combination of the two). In various embodiments, the boron-based powder has a characteristic dimension equal to about two micrometers to about one millimeter. In various embodiments, the chopped fibers comprise a carbon fiber. In various embodiments, the chopped fibers have a length equal to about one millimeter to about two hundred millimeters. In various embodiments, the binder includes polyvinyl alcohol and water. In various embodiments, the binder includes at least one of sugar or phenolic resin.

In various embodiments, the method further includes machining the preform prior to densifying the preform. In various embodiments, the method further includes machining the densified component to form the brake component. In various embodiments, the applied pressure equals about one psi to about 2,000 psi. In various embodiments, the pressure is applied for about one hour.

In various embodiments, the boron-based powder includes at least one of boron and boron-carbide, the chopped fibers comprise a carbon fiber, and the binder includes polyvinyl alcohol, water, phenolic resin and sugar. In various embodiments, the brake component includes a volume of carbon fiber ranging from about five percent to about forty percent. In various embodiments, the brake component has a density ranging from about 1.8 gm/cm³ to about 2.5 g/cm³.

A method of fabricating a ceramic matrix composite component is disclosed. In various embodiments, the method includes the steps of preparing a mixture comprising a chopped fiber material, a boron-based powder and a binder; applying a pressure to the mixture while in a die to form a preform; and densifying the preform via a chemical vapor infiltration process to form a densified component.

In various embodiments, the boron-based powder includes at least one of boron and boron-carbide. In various embodiments, the chopped fiber material comprises a carbon fiber. In various embodiments, the binder includes polyvinyl alcohol and water. In various embodiments, the binder also includes sugar. In various embodiments, the binder also includes phenolic resin or a similar carbon yielding compound. In various embodiments, the ceramic matrix composite component includes a volume of carbon fiber ranging from about five percent to about forty percent and has a density ranging from about 1.8 gm/cm³ to about 2.5 g/cm³.

The foregoing features and elements may be combined in any combination, without exclusivity, unless expressly indicated herein otherwise. These features and elements as well as the operation of the disclosed embodiments will become more apparent in light of the following description and accompanying drawings.

### BRIEF DESCRIPTION OF THE DRAWINGS

The accompanying drawings illustrate various embodiments employing the principles described herein and are a part of the specification. The illustrated embodiments are meant for description and not to limit the scope of the claims.
FIG. 1A illustrates an exemplary aircraft having a brake system, in accordance with various embodiments;
FIG. 1B illustrates a cross-sectional view of a brake assembly, in accordance with various embodiments; and
FIG. 2 describes a method of forming components of a heat sink, in accordance with various embodiments.

### DETAILED DESCRIPTION

The following detailed description of various embodiments herein makes reference to the accompanying drawings, which show various embodiments by way of illustration. While these various embodiments are described in sufficient detail to enable those skilled in the art to practice the disclosure, it should be understood that other embodiments may be realized and that changes may be made without departing from the scope of the disclosure. Thus, the detailed description herein is presented for purposes of illustration only and not of limitation. Furthermore, any reference to singular includes plural embodiments, and any reference to more than one component or step may include a singular embodiment or step. Also, any reference to attached, fixed, connected, or the like may include permanent, removable, temporary, partial, full or any other possible attachment option. Additionally, any reference to without contact (or similar phrases) may also include reduced contact or minimal contact. It should also be understood that unless specifically stated otherwise, references to "a," "an" or "the" may include one or more than one and that reference to an item in the singular may also include the item in the plural. Further, all ranges may include upper and lower values and all ranges and ratio limits disclosed herein may be combined.

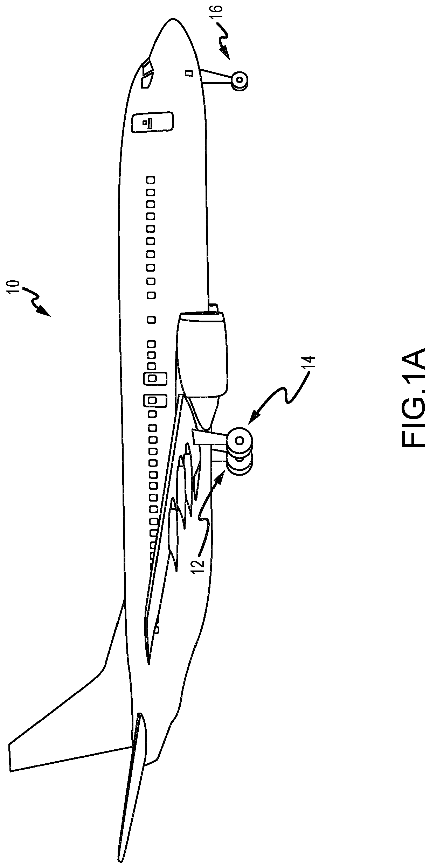

Referring to FIG. 1A, in accordance with various embodiments, an aircraft 10 is illustrated. The aircraft 10 includes landing gear, which may include a left main landing gear 12, a right main landing gear 14 and a nose landing gear 16. The landing gear support the aircraft 10 when it is not flying, allowing the aircraft 10 to taxi, take off and land without damage. While the disclosure refers to the three landing gear configurations just described, the disclosure nevertheless contemplates any number of landing gear configurations. Further, while the disclosure is directed generally to brake systems or mechanisms for aircraft, the principles disclosed herein may be equally applicable to brake systems or mechanisms used for other vehicles, such as, for example, those used on locomotives or cars for trains or on automobiles.

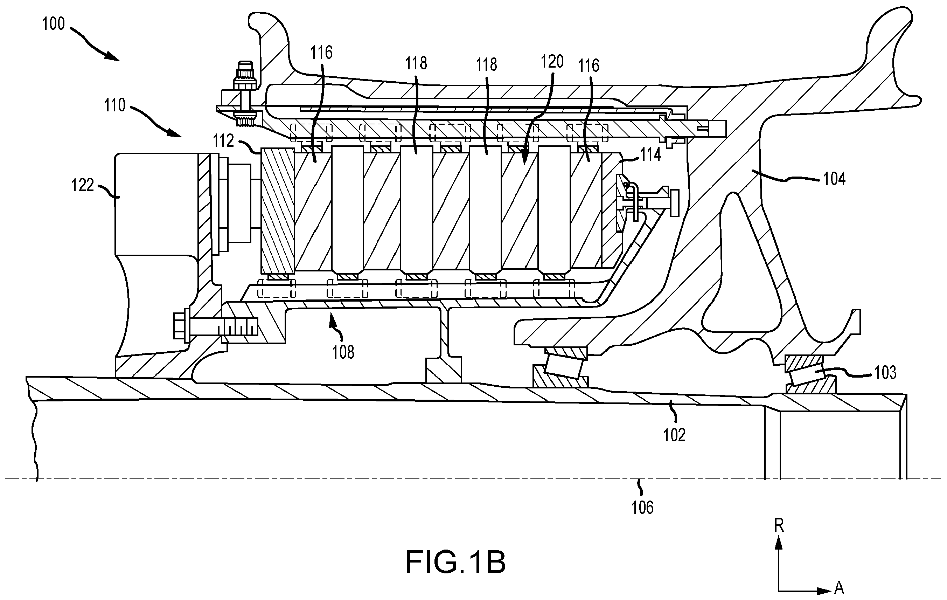

Referring now to FIG. 1B, there is schematically depicted a brake mechanism 100 configured for use on a landing gear, such as, for example, each of the left main landing gear 12 and the right main landing gear 14 described above with reference to FIG. 1A. In various embodiments, the brake mechanism is mounted on an axle 102 for use with a wheel 104 disposed on and configured to rotate about the axle 102 via one or more bearing assemblies 103. A central axis 106 extends through the axle 102 and defines a center of rotation of the wheel 104. A torque plate barrel 108 (sometimes referred to as a torque tube or barrel or a torque plate) is aligned concentrically with the central axis 106, and the wheel 104 is rotatable relative to the torque plate barrel 108.

The brake mechanism 100 includes a piston assembly 110, a pressure plate 112 disposed adjacent the piston assembly 110, an end plate 114 positioned a distal location from the piston assembly 110, and a plurality of rotor disks 116 interleaved with a plurality of stator disks 118 positioned intermediate the pressure plate 112 and the end plate 114. The pressure plate 112, the plurality of rotor disks 116, the plurality of stator disks 118 and the end plate 114 together form a brake heat sink or brake stack 120. The pressure plate 112, the end plate 114 and the plurality of stator disks 118 are mounted to the torque plate barrel 108 and remain rotationally stationary relative to the axle 102. The plurality of rotor disks 116 is mounted to the wheel 104 and rotate with respect to each of the pressure plate 112, the end plate 114 and the plurality of stator disks 118.

An actuating mechanism for the brake mechanism 100 includes a plurality of piston assemblies, including the piston assembly 110, circumferentially spaced around a piston housing 122 (only one piston assembly is illustrated in FIG. 1B). Upon actuation, the plurality of piston assemblies affects a braking action by urging the pressure plate 112 and the plurality of stator disks 118 into frictional engagement with the plurality of rotor disks 116 and against the end plate 114. Through compression of the plurality of rotor disks 116 and the plurality of stator disks 118 between the pressure plate 112 and the end plate 114, the resulting frictional contact slows or stops or otherwise prevents rotation of the wheel 104. In various embodiments, the plurality of rotor disks 116 and the plurality of stator disks 118 are fabricated from various materials, such as, for example, carbon fiber and ceramic matrix composite materials, that enable the brake disks to withstand and dissipate the heat generated during and following a braking action.

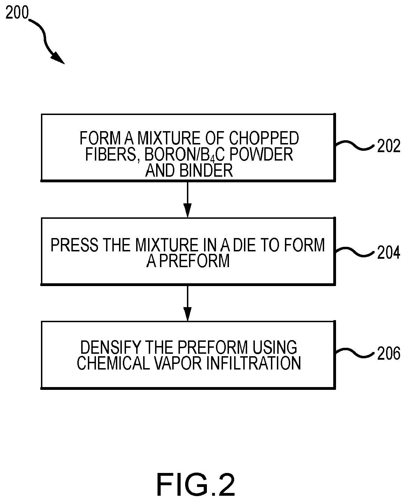

With reference to FIG. 2, one or more of the brake or heat sink components described above (*e.g*., one or more of the plurality of stator disks 118 or the plurality of rotor disks 116) may be fabricated from a mixture of chopped carbon fibers and a powder of boron or boron carbide to produce a component exhibiting a high heat capacity. More specifically, a method 200 of fabricating a component (*e.g*., a brake component or a ceramic matrix composite component) of a heat sink is disclosed. In various embodiments, the method 200 comprises several steps, including a first step 202, whereby a mixture of chopped fibers (or a chopped fiber material), a boron-based powder (*e.g.*, at least one of boron or boron-carbide) and a binder is formed. In a second step 204, the mixture is introduced into a die (or a mold) and pressed to form a preform. The second step 204 may be performed within a range of pressures (e.g., from about one psi (6.9 kPa) to about 2,000 psi (13.8 MPa)) and within a range of times (e.g., from about thirty minutes to about ten hours). In a third step, the preform is densified with an additional material, such as, for example, carbon, using a chemical vapor infiltration process to form a densified component. In various embodiments, the preform may comprise a porous structure, which may include any structure derived from a fibrous material such as carbon fibers or the like. In various embodiments, the carbon fibers may be derived from polyacrylonitrile (PAN), rayon (synthetic fiber derived from cellulose), oxidized polyacrylonitrile fiber (OPF), pitch, or the like. In various embodiments, the starting fiber may be pre-oxidized PAN or fully carbonized commercial carbon fiber.

In various embodiments, the chopped fibers within the mixture comprise one or more fiber materials, such as, for example, carbon fibers, aramid fibers, silicon carbide fibers or other similar types of fibers. A fiber filament diameter (or a characteristic cross sectional dimension) tends to be similar between different types of fiber materials. In various embodiments, for example, the fiber filament diameter has a value equal to about five micrometers (5 µm) (≈ 0.0002 in), about 10 µm (≈ 0.0004 in), about 20 µm (≈ 0.0008 in), about 50 µm (≈ 0.002 in) or about 100 µm (≈ 0.004 in). In this regard, the fiber filament diameter may range from about 7 µm (≈ 0.0003 in) to about 15 µm (≈ 0.0006 in), or from about 5 µm (≈ 0.0002 in) to about 50 µm (≈ 0.002 in), or from about 3 µm (≈ 0.0001 in) to about 100 µm (≈ 0.004 in). Similarly, a fiber filament length for the chopped fibers may have a value ranging from about one millimeter (1 mm) (≈ 0.035 in) to about 254 mm (≈ 10.0 in), or from about 2 mm (≈ 0.07 in) to about 100 mm (≈ 4.0 in), or from about 3.2 mm (≈ 0.125 in) to about 50 mm (≈ 2.0 in). In various embodiments, the fiber filament length (or a mean fiber filament length) may scale with a characteristic dimension of the die or the mold and have, for example, a value up to or equal to a diameter of the die or the mold for an annular shaped preform.

In various embodiments, the powder within the mixture comprises a ceramic material in the form of ceramic powder. Suitable ceramic powders may include, for example, silicon carbide (SiC), boron (B), boron carbide (B₄C), silicon nitride (Si₃N₄), titanium diboride (TiB₂) or other similar oxides, borides or nitrides. A range of particle sizes (or powder sizes) may be employed in the ceramic powders used to fabricate the brake components of the present disclosure. For example, in various embodiments, a micron-sized boron (B) or boron carbide (B₄C) powder may be selected. In various embodiments, the powder size may include a particle size distribution such as a bimodal particle distribution. In various embodiments, the powder size (or the powder size distribution) may be selected based on a desired grain size with smaller powder sizes yielding smaller grain sizes. For example, a nanoparticle-sized powder is typically found to yield a smaller grain size than a micrometer-sized powder. The grain size may also impact the thermal properties of the finished component. In various embodiments, uniformity of the dimensions or size of individual particles of the powder (*e.g.*, a particle uniformity) may vary. For example, the particle uniformity may vary in characteristic dimension (*e.g*., diameter) by as much as +/-80%. In various embodiments, the particle size or uniformity may also vary according to a Gaussian distribution or by other industrially accepted variances.

In various embodiments, an upper size limit for the powder may be defined by an inter-filament distance within a given tow bundle of the chopped fibers or some other characteristic dimension or desired grain size of the resulting brake component. The upper size limit may vary, but limits on the order of about 3 µm (≈ 0.0001 in), of about 5 µm (≈ 0.0002 in), about 10 µm (≈ 0.0004 in), about 20 µm (≈ 0.0008 in), about 50 µm (≈ 0.002 in), about 100 µm (≈ 0.004 in), about 150 µm (≈ 0.006 in), about 200 µm (≈ 0.008 in) or about 300 µm (≈ 0.012 in) are contemplated. A lower size limit, on the other hand, may also vary, but is typically dictated by commercial availability. For example, a lower size limit may be on the order of about ten nanometers (10 nm) (≈ 4×10⁻⁷ in), about 50 nm (≈ 2×10⁻⁶ in), about 100 nm (≈ 4×10⁻⁵ in), about 500 nm (≈ 2×10⁻⁵ in), about 5 µm (≈ 0.0002 in), about 10 µm (≈ 0.0004 in), about 20 µm (≈ 0.0008 in) or about 50 µm (≈ 0.002 in).

In various embodiments, the binder within the mixture may comprise one or more of a polyvinyl alcohol (PVA), a phenolic resin, a sugar and a water component. In addition to PVA, the binder may comprise other water soluble polymers, such as, for example, polyvinylpyrrolidone (PVP), polyvinyl acetate, poly (2-oxazoline), polyacrylamide (PAM), hydro ethylcellulose, polyethyleneimine (PEI) or polyacrylate

(PAA). In various embodiments, the binder may comprise a solution containing PVA and water. Similarly, in various embodiments, the binder may comprise a solution containing PVA, water and sugar. In various embodiments, the sugar component may comprise any of the commonly known monosaccharides or disaccharides.

### Example 1.

A mixture of chopped fibers, a boron-based powder and a binder is formed. The chopped fibers are carbon fibers having a length equal to about 1 mm (≈ 0.035 in) and a diameter equal to about 8 µm (≈ 0.0003 in). The boron-based powder is boron carbide (B₄C) having a size equal to about 3 µm (≈ 0.0001 in) and the binder is a solution of polyvinyl alcohol (PVA) and water. The mixture is blended and placed into a die having an annular shape and then pressed for approximately one hour (1 hr) under a load of about one hundred pounds per square inch (100 psi) (≈ 690 kPa) to form a preform having a porous interior. The preform then undergoes chemical vapor infiltration (CVI) with carbon to form a ceramic matrix composite (CMC) component - *e.g.,* an annular shaped rotor disk or stator disk - having a carbon matrix and boron carbide (B₄C) interior. In various embodiments, the CVI process is repeated until a desired density is achieved. The resulting CMC component, in various embodiments, exhibits a density of about 1.80 g/cm3 to about 2.35 g/cm3, with less than 5% open porosity, and a volume of carbon fiber ranging from about 5 percent to about 40 percent or, in various embodiments, from about 20 percent to about 25 percent.

### Example 2.

A mixture of chopped fibers, a boron-based powder and a binder is formed. The chopped fibers are carbon fibers having a length equal to about 1 mm (≈ 0.035 in) and a diameter equal to about 8 µm (≈ 0.0003 in). The boron-based powder is boron carbide (B₄C) having a size equal to about 3 µm (≈ 0.0001 in) and the binder is a solution of polyvinyl alcohol (PVA), water and sugar. The mixture is blended and placed into a die having an annular shape and then pressed for approximately one hour (1 hr) under a load of about one hundred pounds per square inch (100 psi) (≈ 690 kPa) to form a preform having a porous interior. The preform then undergoes chemical vapor infiltration (CVI) with carbon to form a ceramic matrix composite (CMC) component - *e.g.,* an annular shaped rotor disk or stator disk - having a carbon matrix and boron carbide (B₄C) interior. In various embodiments, the CVI process is repeated until a desired density is achieved. The resulting CMC component, in various embodiments, exhibits a density of about 1.80 g/cm3 to about 2.35 g/cm3, with less than 5% open porosity, and a volume of carbon fiber ranging from about 5 percent to about 40 percent or, in various embodiments, from about 20 percent to about 25 percent.

### Example 3.

A mixture of chopped fibers, a boron-based powder and a binder is formed. The chopped fibers are carbon fibers having a length equal to about 1 mm (≈ 0.035 in) and a diameter equal to about 8 µm (≈ 0.0003 in). The boron-based powder is boron (B) having a size equal to about 3 µm (≈ 0.0001 in) and the binder is a solution of polyvinyl alcohol (PVA) and water. The mixture is blended and placed into a die having an annular shape and then pressed for approximately one hour (1 hr) under a load of about one hundred pounds per square inch (100 psi) (≈ 690 kPa) to form a preform having a porous interior. The preform then undergoes chemical vapor infiltration (CVI) with carbon to form a ceramic matrix composite (CMC) component - *e.g.,* an annular shaped rotor disk or stator disk - having a carbon matrix and a boron and boron carbide (B₄C) interior. In various embodiments, the CVI process is repeated until a desired density is achieved. The resulting CMC component, in various embodiments, exhibits a density of about 1.80 g/cm3 to about 2.35 g/cm3, with less than 5% open porosity, and a volume of carbon fiber ranging from about 5 percent to about 40 percent or, in various embodiments, from about 20 percent to about 25 percent.

### Example 4.

A mixture of chopped fibers, a boron-based powder and a binder is formed. The chopped fibers are carbon fibers having a length equal to about 1 mm (≈ 0.035 in) and a diameter equal to about 8 µm (≈ 0.0003 in). The boron-based powder is boron (B) having a size equal to about 3 µm (≈ 0.0001 in) and the binder is a solution of polyvinyl alcohol (PVA), water and sugar. The mixture is blended and placed into a die having an annular shape and then pressed for approximately one hour (1 hr) under a load of about one hundred pounds per square inch (100 psi) (≈ 690 kPa) to form a preform having a porous interior. The preform then undergoes chemical vapor infiltration (CVI) with carbon to form a ceramic matrix composite (CMC) component - *e.g.,* an annular shaped rotor disk or stator disk - having a carbon matrix and a boron and boron carbide (B₄C) interior. In various embodiments, the CVI process is repeated until a desired density is achieved. The resulting CMC component, in various embodiments, exhibits a density of about 1.80 g/cm3 to about 2.35 g/cm3, with less than 5% open porosity, and a volume of carbon fiber ranging from about 5 percent to about 40 percent or, in various embodiments, from about 20 percent to about 25 percent.

In accordance with various embodiments, the brake components fabricated in accordance with this disclosure - *e.g.,* one or more of the plurality of stator disks 118 or the plurality of rotor disks 116 - is comprised of a carbon-carbon (C/C) material having a non-carbon, high specific heat component interspersed throughout the brake component, where the high specific heat component includes any component (typically ceramic) that raises the specific heat of the core material above that of the C/C material alone. For example, in various embodiments, the brake component may comprise a C/C material that includes a percentage of boron, a boron component, or other material having a high specific heat (*i.e.*, a specific heat higher than that of the C/C material alone), including ceramic materials. In various embodiments, the brake component may comprise a C/C material with a percentage of boron carbide (B₄C) disposed substantially throughout the component. For example, in various embodiments, the brake component comprises a C/C material with between about one percent (1%) and about forty percent (40%) of B₄C dispersed throughout the component; in various embodiments, the brake component comprises a C/C material with between about ten percent (10%) and about twenty percent (20%) of B₄C dispersed throughout the component; and in various embodiments, the brake component comprises a C/C material with about fifteen percent (15%) of B₄C dispersed throughout the component. In various embodiments, the percentage values recited above may be determined by either volume or by weight.

Various advantages of dispersing boron materials, such as, for example, B or B₄C, throughout the C/C material comprising the brake component include the heat capacity Cp (*e.g*., the material specific heat, cₚ, multiplied by the material density, ρ) of the resulting component being increased beyond that of the heat capacity of the C/C material by itself. In various embodiments, a higher heat capacity of the brake component provides a greater ability to absorb and store the heat energy generated at the wear surfaces of the component without the attendant increase in temperature that accompanies materials having lower heat capacities. The ability to absorb and store greater amounts of heat energy at lower temperatures enables the brake component to be run harder and at higher energies for longer periods of time, without increasing the brake temperature and the corresponding rate of oxidation of the brake component, than is possible for core materials having lower heat capacities. In various embodiments, the boron carbide material described above comprises a substantial equivalent to B₄C, such as, for example and without limitation, B₁₂C₃.

Benefits, other advantages, and solutions to problems have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C. Different cross-hatching is used throughout the figures to denote different parts but not necessarily to denote the same or different materials.

Systems, methods and apparatus are provided herein. In the detailed description herein, references to "one embodiment," "an embodiment," "various embodiments," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Numbers, percentages, or other values stated herein are intended to include that value, and also other values that are about or approximately equal to the stated value, as would be appreciated by one of ordinary skill in the art encompassed by various embodiments of the present disclosure. A stated value should therefore be interpreted broadly enough to encompass values that are at least close enough to the stated value to perform a desired function or achieve a desired result. The stated values include at least the variation to be expected in a suitable industrial process, and may include values that are within 10%, within 5%, within 1%, within 0.1%, or within 0.01% of a stated value. Additionally, the terms "substantially," "about" or "approximately" as used herein represent an amount close to the stated amount that still performs a desired function or achieves a desired result. For example, the term "substantially," "about" or "approximately" may refer to an amount that is within 10% of, within 5% of, within 1% of, within 0.1% of, and within 0.01% of a stated amount or value.

In various embodiments, system program instructions or controller instructions may be loaded onto a tangible, non-transitory, computer-readable medium (also referred to herein as a tangible, non-transitory, memory) having instructions stored thereon that, in response to execution by a controller, cause the controller to perform various operations.

It should be understood that any of the above described concepts can be used alone or in combination with any or all of the other above described concepts. Although various embodiments have been disclosed and described, one of ordinary skill in this art would recognize that certain modifications would come within the scope of the invention as defined by the claims.

## Claims

1. A method of fabricating a ceramic matrix composite component, comprising:
preparing (202) a mixture comprising a chopped fiber material, a boron-based powder and a binder;
applying a pressure (204) to the mixture while in a die to form a preform; and
densifying (206) the preform via a chemical vapor infiltration process to form a densified component.

2. The method of claim 1, wherein the boron-based powder includes at least one of boron or boron-carbide.

3. The method of claim 1 or 2, wherein the chopped fiber material comprises a carbon fiber.

4. The method of any preceding claim, wherein the binder includes polyvinyl alcohol and water.

5. The method of any preceding claim, wherein the binder includes at least one of sugar or phenolic resin.

6. The method of any preceding claim, wherein the ceramic matrix composite component includes a volume of carbon fiber ranging from about five percent to about forty percent and has a density ranging from about 1.8 gm/cm³ to about 2.5 g/cm³.

7. The method of any preceding claim wherein the ceramic matrix composite component is a brake component.

8. The method of claim 7, wherein the boron-based powder has a characteristic dimension equal to about two micrometers to about one millimeter.

9. The method of claim 7 or 8, wherein the chopped fibers have a length equal to about one millimeter to about two hundred millimeters.

10. The method of claim 7, 8 or 9, further comprising machining the preform prior to densifying the preform.

11. The method of claim 10, further comprising machining the densified component to form the brake component.

12. The method of claim 1, wherein the pressure is within a range of about one psi (6.89 kPa) to about 2,000 psi (13.79 MPa).

13. The method of claim 12, wherein the pressure is applied for about one hour.

14. The method of any of claims 7 to 13, wherein the brake component includes a volume of carbon fiber ranging from about five percent to about forty percent.

15. The method of any of claims 7 to 14, wherein the brake component has a density ranging from about 1.8 gm/cm³ to about 2.5 g/cm³.
